# EUROPÄISCHE PATENTANMELDUNG

(11) **EP 4 781 867 A1**
(43) Veröffentlichungstag der Anmeldung: **29.07.2026**
(21) Anmeldenummer: 26153577.7
(22) Anmeldetag: 22.01.2026
(51) Int. Cl.: A47B 47/04, H02B 1/30

(54) **SCHRANKVORRICHTUNG FÜR ELEKTRISCHE INSTALLATIONEN UND/ODER REGELUNGEN, ELEKTRISCHE VORRICHTUNG, VERFAHREN ZUR HERSTELLUNG EINES MÖBELSTÜCKS**

(30) Priorität: 23.01.2025 DE 102025102461
(71) Anmelder: Mangelberger Elektrotechnik GmbH, 91154 Roth (DE)
(72) Erfinder: Mangelberger, Philip, 91126 Schwabach (DE)
(74) Vertreter: Dr. Gassner & Partner mbB

(57) **Zusammenfassung**

Schrankvorrichtung (1) für elektrische Installationen und/oder Regelungen, wobei die Schrankvorrichtung (1) eine Vorderseite und eine der Vorderseite bezüglich einer Tiefenrichtung gegenüberliegende Rückseite hat und aufweist:
- einen Rahmen (3), der mehrere Rahmenflächen (4, 5, 6, 7) ausbildet; und
- eine Rückwand (8), die den Rahmen (3) auf der Rückseite abschließt;
dadurch gekennzeichnet, dass
die Rahmenflächen (4, 5, 6, 7) jeweils aus mehreren aus einem Fasermaterial gebildeten Rahmenmodulen (16, 17a, 17b, 18, 41a, 41b) gebildet sind, die jeweils wenigstens einen in eine umfänglich um den Rahmen (3) verlaufende Montagerichtung (M) abstehenden, hinterschnittenen Vorsprung (19) und wenigstens eine Ausnehmung (20) aufweisen, wobei die Ausnehmung (20) eines jeweiligen Rahmenmoduls (16, 17a, 17b, 18, 41a, 41b) gegengleich zum wenigstens einen Vorsprung (19) des dem jeweiligen Rahmenmodul (16, 17a, 17b, 18, 41a, 41b) entlang der Montagerichtung (M) nachfolgenden Rahmenmoduls (16, 17a, 17b, 18, 41a, 41b) ausgebildet ist und den wenigstens einen Vorsprung (19) formschlüssig hintergreift.

## Beschreibung

Die vorliegende Erfindung betrifft eine Schrankvorrichtung für elektrische Installationen und/oder Regelungen, wobei die Schrankvorrichtung eine Vorderseite und eine der Vorderseite bezüglich einer Tiefenrichtung gegenüberliegende Rückseite hat und aufweist: einen Rahmen, der mehrere Rahmenflächen ausbildet; und eine Rückwand, die den Rahmen auf der Rückseite abschließt.

Daneben betrifft die Erfindung eine elektrische Vorrichtung sowie ein Verfahren zur Herstellung eines Möbelstücks.

Schrankvorrichtungen dienen insbesondere als Schaltschränke der Aufnahme elektrischer Installations- bzw. Regelungskomponenten. Es wurde bereits vorgeschlagen, einen Rahmen solcher Schrankvorrichtungen aus einem Fasermaterial zu fertigen.

So offenbart beispielsweise die US 2022/0037861 A1 ein elektrisches Baugruppenmodul mit einem äußeren Rahmen, der aus oberen, unteren und seitlichen Wänden gebildet ist, und einer Rückwand. Die Wände sind jeweils aus einer äußeren Schicht geformt, die aus Holz besteht.

Der Vorteil der Verwendung eines Fasermaterial liegt in dem geringeren energetischen Fertigungsaufwand sowie in der leichteren Entsorgbarkeit der Schrankvorrichtung. Allerdings stellt die häufig anzutreffende thermische Verwertung der Schrankvorrichtung nach seiner Nutzung für die Installationen bzw. Regelungen eine nur beschränkt nachhaltige Entsorgungsoption dar. Denn durch die thermische Verwertung wird in dem Fasermaterial gespeichertes Kohlenstoffdioxid sofort wieder der Atmosphäre zugefügt.

Die WO 2006/107220 A1 offenbart einen quadratischen Schrank, dessen Seitenflächen jeweils ein Komponente umfassen. Die Komponente weist ein erstes Ende auf mit einem Verbinder und ein gegenüberliegendes zweites Ende auf, das dem Verbinder am ersten Ende einer weiteren derartigen Komponente verbunden ist. Der Verbinder ist eine Schwalbenschwanzverbindung.

Die GB 137 391 A offenbart ein Regal, dessen Fächer mittels Schwalbenschwanzverbindungen zusammengesetzt sind.

Daneben ist aus der DE 10 2022 130 898 A1 ein Baukastensystem zum Zusammensetzen eines explosionsgeschützten Gehäuses bekannt. Das System enthält mehrere aneinander anordenbare und koppelbare Eckelemente und Wandelemente, mit denen ein Gehäuseteil mit einer rechteckigen Grundform hergestellt wird. Die Elemente sind an ihren seitlichen Flanken durch eine Rastverbindung mechanisch verbunden.

Der Erfindung liegt mithin die Aufgabe zugrunde, eine Möglichkeit zur verbesserten, insbesondere nachhaltigeren, Konstruktion und Verwertung einer Schrankvorrichtung für elektrische Installationen und/oder Regelungen anzugeben.

Diese Aufgabe wird erfindungsgemäß durch eine Schrankvorrichtung gemäß Anspruch 1 gelöst.

Die Erfindung beruht auf der Überlegung, die Rahmenflächen der Schrankvorrichtung aus Rahmenmodulen auszubilden, sodass die Rahmenflächen nach einem Ende der Nutzung für die elektrischen Installationen bzw. Regelungen einfach zerlegbar, anderweitig zusammensetzbar und einer neuen Nutzung zuführbar sind. Außerdem ermöglich der modularisierte Aufbau der Rahmenflächen auch eine Erweiterung bzw. Verkleinerung der Schrankvorrichtung während seiner Nutzung für die elektrischen Installationen bzw. Regelungen, indem entsprechende Rahmenmodule hinzugefügt bzw. entfernt werden. Eine einfache Aufbaubarkeit und Zerlegbarkeit der Schrankvorrichtung bei einer gleichzeitig hohen Stabilität wird dadurch erreicht, dass die Rahmenmodule - vergleichbar mit Puzzlestücken - die hinterschnittenen Vorsprünge und die gegengleichen Ausnehmungen aufweisen.

In bevorzugter Ausgestaltung der erfindungsgemäßen Schrankvorrichtung ist vorgesehen, dass der Rahmen eine erste Nut zum Haltern der Rückwand aufweist und zumindest ein Teil der, vorzugsweise alle, Rahmenmodule einen die erste Nut abschnittsweise ausbildenden ersten Nutabschnitt aufweist oder aufweisen. Die Rückwand kann in die erste Nut eingesetzt sein.

Daneben kann bei der erfindungsgemäßen Schrankvorrichtung vorgesehen sein, dass der Rahmen eine zweite Nut, die sich näher an der Vorderseite befindet als die Rückwand, aufweist und zumindest ein Teil der, vorzugsweise alle, Rahmenmodule einen die zweite Nut abschnittsweise ausbildenden zweiten Nutabschnitt aufweist.

In bevorzugter Weiterbildung ist dabei vorgesehen, dass die Schrankvorrichtung Verbindungsstücke aufweist, die in die zweite Nut eingesetzt sind. Wenn die Verbindungsstücke zumindest zum Teil überlappend mit mindestens zwei der Rahmenmodule in die zweite Nut eingesetzt sind, stabilisieren die Verbindungsstücke die zusammengesetzten Rahmenmodule an den Übergängen zwischen den mindestens zwei Rahmenmodulen. Es ist möglich, dass alle Verbindungsstücke mit zwei Rahmenmodulen überlappen oder ein Teil der Verbindungsstücke sich nur entlang eines Rahmenmoduls erstreckt.

Um die Verbindungsstücke sicher in der zweiten Nut zu haltern, wird es bevorzugt, wenn die zweite Nut als Schrägnut ausgebildet ist. Die Verbindungsstücke können dann auch gegengleich zur Schrägnut abgeschrägt ausgebildet sein.

Bevorzugt ist die zweite Nut bezüglich der Tiefenrichtung breiter ist als die erste Nut.

Die Verbindungsstücke können jeweils einen zur Vorderseite weisenden Überstand aufweisen, wobei zwischen den Überständen und dem Rahmen eine zur Vorderseite offene dritte Nut ausgebildet ist.

Es wird bei der erfindungsgemäßen Schrankvorrichtung ferner bevorzugt, wenn dieser eine Abschlussvorrichtung aufweist, die an der Vorderseite angeordnet ist und durch die die Schrankvorrichtung geöffnet oder geschlossen werden kann. Die Abschlussvorrichtung ist beispielsweise als Tür, Wanne, Klappe oder Rollladen ausgebildet.

Gemäß einer besonders vorteilhaften Ausgestaltung ist vorgesehen, dass die Abschlussvorrichtung ein Dichtmittel umfasst, das im geschlossenen Zustand der Abschlussvorrichtung in die dritte Nut eingreift, um ein Eindringen von Staub und/oder Flüssigkeiten und/oder Fremdkörpern und/oder UV-Strahlung in das Innere der Schrankvorrichtung zu hemmen. Dadurch können insbesondere Anforderungen einer Schutzklasse hinsichtlich des Staubschutzes eingehalten werden.

Allgemein können die Rahmenmodule sich senkrecht zur Tiefenrichtung erstreckende Kantenflächen aufweisen.

In bevorzugter Ausgestaltung ist vorgesehen, dass von zwei entlang der Montagerichtung aufeinanderfolgende Rahmenmodulen ein erstes Rahmenmodul eine sich schräg von einer der Kantenflächen zu einer Kontaktfläche der zwei Rahmenmodule erstreckende erste Bohrung aufweist und ein zweites Rahmenmodul eine sich schräg von der Kontaktfläche erstreckende zweite Bohrung aufweist und die zwei Rahmenmodule durch einen sich in der ersten Bohrung und der zweiten Bohrung erstreckenden Fixiersplint gesichert oder sicherbar sind. Dies dient ebenfalls dem stabilen Zusammenhalt der Rahmenmodule. Vorzugsweise ist die erste Bohrung eine Durchgangsbohrung. Die zweite Bohrung ist vorzugsweise eine Sackbohrung.

Alternativ oder zusätzlich kann vorgesehen sein, dass in einer der Kantenflächen wenigstens eines der Rahmenmodule eine Bohrung vorgesehen ist, in die ein, insbesondere zur Temperatur- und/oder Druck- und/oder Feuchtigkeits- und/oder Geruchserfassung und/oder Brandbekämpfung ausgebildeter, Sensor einsteckbar oder eingesteckt ist.

Außerdem kann in einer der Kantenflächen wenigstens eines der Rahmenmodule eine Bohrung vorgesehen sein, in welche ein Befestigungsmittel zur Befestigung der Schrankvorrichtung einsteckbar oder eingesteckt ist.

Die Rahmenflächen können Seitenflächen umfassen. Dabei wird es bevorzugt, wenn zum Ausbilden der Seitenflächen Rahmenmodule erster Art vorgesehen sind. Bei den Rahmenmodulen erster Art können insgesamt ein, zwei oder drei Vorsprünge vorgesehen sein.

Bei den Rahmenmodulen erster Art können eine jeweilige Ausnehmung und ein jeweiliger Vorsprung mittig bezüglich der Tiefenrichtung angeordnet sein. Dabei kann es sich um den einzigen Vorsprung handeln.

Alternativ sind bei den Rahmenmodulen erster Art jeweils zwei weitere Vorsprünge und zwei weitere Ausnehmungen vorgesehen. Dabei kann der mittig bezüglich der Tiefenrichtung angeordnete Vorsprung breiter bezüglich der Tiefenrichtung als die zwei weiteren Ausnehmungen ausgebildet sein.

Allgemein können die Rahmenflächen bei der erfindungsgemäßen Schrankvorrichtung außerdem eine Grundfläche und wenigstens eine Deckenfläche umfassen. Wenn mehrere Deckenflächen vorgesehen sind, die sich beispielsweise auf unterschiedlichen Höhen bezüglich der Grundfläche befinden, ist für jede weitere Deckenfläche eine weitere Seitenfläche vorgesehen.

Zum Ausbilden der Grundfläche und/oder der wenigstens einen Deckenfläche können Rahmenmodule zweiter Art vorgesehen sein.

Bevorzugt weisen die Rahmenmodule zweiter Art jeweils oder zum Teil wenigstens eine Durchgangsöffnung für elektrische Leitungen der elektrischen Installation und/oder für Löschmittel auf. Die Durchgangsöffnung kann bezüglich der Tiefenrichtung näher an der Rückseite als an der Vorderseite angeordnet sein.

Bei den Rahmenmodulen zweiter Art können jeweils zwei Vorsprünge und Ausnehmungen vorgesehen sein. Es ist dabei möglich, dass bei den Rahmenmodulen zweiter Art jeweils ein weiterer Vorsprung und eine weitere Ausnehmung vorgesehen sind. Einer der Vorsprünge, der in Tiefenrichtung zu zwei anderen der Vorsprünge benachbart ist, kann bezüglich der Tiefenrichtung breiter als die zwei anderen Vorsprünge sein.

Im Detail kann vorgesehen sein, dass ein Vorsprung und eine Ausnehmung eines jeweiligen Rahmenmoduls zweiter Art im zweiten Nutabschnitt ausgebildet sind.

Um eine große Variabilität der Abmessungen der Schrankvorrichtung bei einer gleichzeitig geringen Anzahl von Rahmenmodulen zu erzielen, können Rahmenmodule zweiter Art mit wenigsten zwei unterschiedlicher Längen entlang der Montagerichtung vorgesehen sein. Dabei können in ersten Rahmenmodulen zweiter Art eine Durchgangsöffnung vorgesehen sein und in zweiten Rahmenmodulen zweiter Art, deren Länge größer als jene der ersten Rahmenmodule erster Art ist, zwei Durchgangsöffnungen vorgesehen sind. Außerdem können sich bei den zweiten Rahmenmodulen zweiter Art ein Verbindungsstück vollständig entlang des zweiten Rahmenmoduls zweiter Art erstrecken und zwei Verbindungsstücke überlappend mit benachbarten Rahmenmodulen entlang des zweiten Rahmenmoduls erstrecken.

Die Schrankvorrichtung kann daneben auch ein Standmittel, insbesondere einen Sockel, Rollen oder Stützen, das an der Grundfläche befestigt ist umfassen.

Außerdem wird bevorzugt, wenn die Schrankvorrichtung eine auf der Grundfläche angeordnete Wasserschutzvorrichtung zum Abdichten der Schrankvorrichtung gegen ein Eindringen stehender Flüssigkeiten aufweist. Eine solche Wasserschutzvorrichtung, auch als Wasserschutzbag bekannt, dient insbesondere dem Schutz des Inneren der Schutzvorrichtung vor eindringendem Hochwasser.

Zum Verbinden einer jeweiligen Seitenfläche mit der Deckenfläche und einer jeweiligen Seitenfläche mit der Grundfläche kann jeweils ein Rahmenmodul dritter Art vorgesehen sein, welches einen rechten Innenwinkel ausbildet, vorgesehen sein. Die Rahmenmodule dritter Art bilden dann insbesondere Eckstücke der Schrankvorrichtung aus. Sofern mehrere Deckenflächen vorgesehen sind, kann auch ein Rahmenmodul dritter Art vorgesehen sein, das einen rechten Außenwinkel ausbildet.

Die Schrankvorrichtung kann ferner mehrere aus Rahmenmodulen, insbesondere Rahmenmodulen erster und/oder zweiter Art, gebildete Innenwände aufweisen, die durch T-förmige Rahmenmodule vierter Art mit dem Rahmen verbunden sind. Dadurch wird eine zweckmäßige Untergliederung der Schrankvorrichtung unter Verwendung von Gleichteilen bezüglich des Rahmens für die Innenwände erzielt. Dabei können vier Innenwände durch kreuzförmige Verbindungsmodule miteinander verbunden sein. Alternativ oder zusätzlich können drei Innenwände durch Rahmenmodule vierter Art miteinander verbunden sein. Alternativ oder zusätzlich können zwei Innenwände durch Rahmenmodule dritter Art miteinander verbunden sein.

Ein jeweiliges Rahmenmodul vierter Art kann einen sich senkrecht zur Montagerichtung und zur Tiefenrichtung erstreckenden Abzweigabschnitt aufweisen, wobei erste Rahmenmodule vierter Art vorgesehen sein, deren Abzweigabschnitt wenigstens einen Vorsprung entsprechend der wenigstens einen Ausnehmung des mit dem ersten Rahmenmodul vierter Art verbundenen Rahmenmoduls der Innenwand aufweisen, und/oder zweite Rahmenmodule vierter Art vorgesehen sein, deren Abzweigabschnitt wenigstens eine Ausnehmung entsprechend des wenigstens einen Vorsprungs des mit dem zweiten Rahmenmodul vierter Art verbunden Rahmenmoduls der Innenwand aufweisen.

Die Verbindungsmodule können vier Abschnitte aufweisen, von denen zwei Abschnitte wenigstens einen Vorsprung entsprechend der wenigstens einen Ausnehmung der mit dem Verbindungsmodul verbundenen Rahmenmodule der Innenwände aufweisen und zwei Abschnitte eine Ausnehmung entsprechend dem wenigstens einen Vorsprung der mit dem Verbindungsmodul verbundenen Rahmenmodule der Innenwände aufweisen.

In bevorzugter Ausgestaltung der erfindungsgemäßen Schrankvorrichtung weisen die Rahmenmodule jeweils ein Dichtmittel an einer Kontaktfläche zum nachfolgenden Rahmenmodul zum Staub- und/oder UV- und/oder Feuchtigkeitsschutz auf.

Bei der erfindungsgemäßen Schrankvorrichtung kann außerdem vorgesehen sein, dass ein oder ein jeweiliges Rahmenmodul und ein diesem nachfolgendes Rahmenmodul an ihren einander gegenüberliegenden Kontaktflächen mit sich entlang der Tiefenrichtung erstreckenden, gegengleich zueinander ausgebildeten Absätzen versehen sind. Diese Absätze erhöhen die Dichtigkeit der Schrankvorrichtung an den Kontaktflächen zwischen zwei Rahmenmodulen.

In vorteilhafter Weiterbildung kann vorgesehen sein, dass sich der ausnehmungsseitge Absatz zumindest bis zur wenigstens einen Ausnehmung, bevorzugt über die wenigstens eine Ausnehmung hinaus, erstreckt, sodass der Absatz die wenigstens eine Ausnehmung und den durch sie hintergriffenen Vorsprung von der dem Inneren abgewandten Seite des Rahmenmoduls betrachtet verdeckt. Dadurch kann eine Verbindungsstelle verdeckt werden, um ein homogeneres Erscheinungsbild des Rahmen zu erreichen.

Alternativ kann sich der vorsprungseitge Absatz zumindest bis zum wenigstens einen Vorsprung, bevorzugt über den wenigstens einen Vorsprung hinaus, erstrecken, sodass der Absatz den wenigstens einen Vorsprung und die ihn hintergreifende wenigstens eine Ausnehmung von der dem Inneren abgewandten Seite des Rahmenmoduls betrachtet verdeckt.

Da die Rückwand in der Regel nur begrenzt wiederverwertbar ist und thermisch verwertet werden muss, kann in bevorzugter Ausgestaltung vorgesehen sein, dass die Rückwand mehrere Sollbruchstellen aufweist. Dies ermöglicht eine zügige Zerkleinerung der Rückwand in separate Rückwandabschnitte, die dann platzsparend transportiert bzw. in einen Ofen eingebracht werden können.

Die Rückwand kann ferner aus mehreren separaten Rückwandelementen gebildet sind, die sich bevorzugt jeweils von der Grundfläche zur Deckenfläche erstrecken.

Außerdem kann vorgesehen sein, dass die Rückwand aus mehreren separaten Rückwandelementen gebildet ist, die sich vorzugsweise jeweils zwischen der Deckenfläche und der Grundfläche erstrecken. Für jedes erste Rahmenmodul zweiter Art kann ein Rückwandelement vorgesehen sein. Für jedes zweite Rahmenmodul zweiter Art können mehrere Rückwandelemente vorgesehen sein.

Bei der erfindungsgemäßen Schrankvorrichtung ist das Fasermaterial bevorzugt ein Vollholzmaterial oder ein Furnierholzmaterial. Alternativ kann das Fasermaterial ein, insbesondere durch additiven Druck gefertigtes, Verbundmaterial aus Einzelfasern sein.

Bei den Einzelfasern kann es sich um Holzfasern handeln. Alternativ können die Einzelfasern Textilfasern, insbesondere Baumwoll-, Woll-, Seiden-, Leinen- oder Hanffasern, sein oder umfassen. Eine derartige Schrankvorrichtung eröffnet somit wichtige Verwertungsmöglichkeiten für Textilien im Rahmen der Kreislaufwirtschaft.

Außerdem können die Rahmenmodule und/oder die Rückwand und/oder die Verbindungsstücke der erfindungsgemäßen Schrankvorrichtung, insbesondere durch ein spanendes Fertigungsverfahren wie Schleifen oder Fräsen und/oder durch Beschichten, z.B. einen Lack- oder Lasurauftrag, oberflächenbehandelt sein. In bevorzugter Ausgestaltung ist dabei eine Aussparung der Oberflächenbehandlung vorgesehen, durch welche die Faserstruktur des Fasermaterials freiliegt. Da die Faserstruktur für jedes Rahmenmodul bzw. die Rückwand bzw. ein jeweiliges Verbindungsstück hochgradig individuell ist, kann die freiliegende Faserstruktur, beispielsweise durch eine Bilderfassung und/oder Tasterfassung, erfasst und datenverarbeitet werden, um die entsprechende Komponente eindeutig identifizieren und nachverfolgen zu können. Vorteilhafterweise kann so auf das herkömmliche Aufbringen von Aufklebern u. dgl. mit Barcodes verzichtet werden.

Es ist bei der erfindungsgemäßen Schrankvorrichtung ferner möglich, dass die Rahmenmodule zumindest teilweise, insbesondere die Rahmenmodule erster und/oder zweiter Art, jeweils aus einer Anordnung mit zwei sich entlang der Montagerichtung erstreckenden ersten Passleiten, mit zwei sich entlang der Tiefenrichtung erstreckenden zweiten Passleiten und mit zwei Deckelementen gebildet sind, wobei die ersten und zweiten Passleiten bündig zwischen den Deckelementen angeordnet sind und der wenigstens eine Vorsprung und die wenigstens eine Ausnehmung durch Entfernen entsprechender Abschnitte der ersten und/oder zweiten Passleiten und der Deckelemente ausgebildet sind. Diese Rahmenmodule können in einer Hohlkammerbauweise ausgebildet sein. Vorzugweise kann die Anordnung eine oder mehrere dritte Passleisten aufweisen, die sich zwischen den zweiten Passleiten von der einen ersten Passleiste zur anderen ersten Passleiste erstreckt bzw. erstrecken. Die Schrankvorrichtung kann ferner Feuerlöschmittel aufweisen, die in eine Hohlraum zwischen den Passleisten angeordnet sind.

Die erfindungsgemäße Schankvorrichtung kann ferner einen Lüfter zum Einblasen von Luft in die und/oder Absaugen von Luft aus der Schrankvorrichtung aufweisen.

Eines der Rahmenmodule, vorzugsweise ein Rahmenmodul erster Art, kann eine Öffnung aufweisen. An der Öffnung kann der Lüfter befestigt sein und durch die Öffnung kann die Luft strömen. An die Öffnung kann alternativ ein Lösch- und/oder Meldegeräts und/oder ein Schild (z.B. Bezeichnungsschild, Typenschild oder Werbeschild) angebracht sein.

Im Inneren der erfindungsgemäßen Schrankvorrichtung sind vorzugsweise Montagemittel, insbesondere Montageschienen und/oder Montageplatten, für elektrische Komponenten angeordnet, welche, ggf. auch über weitere Distanzstücke, in Bohrungen in den Rahmenmodulen fixiert sind.

Die der Erfindung zugrunde liegende Aufgabe wird ferner gelöst durch eine elektrische Vorrichtung, aufweisend eine zuvor beschriebene Schrankvorrichtung; und elektrische Komponenten, insbesondere Schalt- und/oder Regelungskomponenten, welche im Inneren der Schrankvorrichtung befestigt sind.

Die der Erfindung zu Grunde liegende Aufgabe wird ferner gelöst durch ein Verfahren zur Herstellung eines Möbelstücks oder mehrerer Möbelstücke, wobei das oder ein jeweiliges Möbelstück wenigstens einen Korpus aufweist, wobei das Verfahren folgende Schritte umfasst: Bereitstellen einer oder mehrerer zuvor beschriebener Schrankvorrichtungen oder einer oder mehrerer zuvor beschriebener elektrischen Vorrichtungen; Zerlegen des Rahmens in die Rahmenmodule; Zusammensetzen eines Teils der durch das Zerlegen des Rahmens erhaltenen Rahmenmodule zum Ausbilden des wenigstens einen Korpus des Möbelstücks oder der Möbelstücke, wobei zum Zusammensetzen die Ausnehmung eines jeweiligen zum Zusammensetzen des Korpus verwendeten Rahmenmoduls den Vorsprung des dem jeweiligen Rahmenmodul entlang einer Korpusmontagerichtung nachfolgenden Rahmenmoduls formschlüssig hintergreift.

Beim Zusammensetzen des Teils der Rahmenmodule können zusätzliche Rahmenmodule dritter Art und/oder Rahmenmodule vierter Art und/oder Verbindungsmodule verwendet werden, um die mehreren Korpusse miteinander zu verbinden. Es ist so möglich, aus einer Schrankvorrichtung Möbelstücke aus mehreren zusammenhängen Korpussen zu fertigen, obwohl solche Gestaltungen bei Schrankvorrichtungen für elektrische Installationen bzw. Regelungen sehr unüblich sind. Außerdem können zusätzliche Rahmenmodule dritter Art mit einem Innenwinkel und/oder einem Außenwinkel verwendet werden, um einzelne Korpusse auszubilden.

Das erfindungsgemäße Verfahren kann ferner folgenden vor dem Zerlegen des Rahmens durchgeführten Schritt umfassen: Demontieren der Abschlussvorrichtung und/oder der Montagemittel.

Sämtliche Ausführungen zur erfindungsgemäßen Schrankvorrichtung lassen sich analog auf die erfindungsgemäße elektrische Vorrichtung und das erfindungsgemäße Herstellungsverfahren übertragen, sodass auch mit diesen die zur Schrankvorrichtung beschriebenen Vorteile erzielt werden können

Weitere Vorteile und Einzelheiten der vorliegenden Erfindung ergeben sich aus den im folgenden beschriebenen Ausführungsbeispielen und anhand der Zeichnungen. Diese sind schematische Darstellungen und zeigen:
- Fig. 1: eine Prinzipskizze eines Ausführungsbeispiel der erfindungsgemäßen elektrischen Vorrichtung;
- Fig. 2: eine teilweise perspektivische Darstellung eines ersten Ausführungsbeispiels der Schrankvorrichtung;
- Fig. 3 u. 4: jeweils eine perspektivische Darstellung eines Rahmenmoduls erster Art gemäß dem ersten Ausführungsbeispiel;
- Fig. 5: eine perspektivische Darstellung eines ersten Rahmenmoduls zweiter Art gemäß dem ersten Ausführungsbeispiel;
- Fig. 6: eine perspektivische Darstellung eines Rahmenmoduls dritter Art gemäß dem ersten Ausführungsbeispiel;
- Fig. 7: eine perspektivische Detailansicht des Rahmens gemäß dem ersten Ausführungsbeispiel;
- Fig. 8: eine perspektivische Ansicht zweier verbundener Rahmenmodule erster Art gemäß dem ersten Ausführungsbeispiel;
- Fig. 9: eine perspektivische Ansicht eines durch ein Rahmenmodul dritter Art mit einem Rahmenmodul zweiter Art verbundenen Rahmenmoduls erster Art gemäß dem ersten Ausführungsbeispiel;
- Fig. 10: eine Draufsicht auf die Rückwand gemäß dem ersten Ausführungsbeispiel;
- Fig. 11: eines eine perspektivische Ansicht eines Rahmens mit Innenwänden gemäß einem zweiten Ausführungsbeispiel der erfindungsgemäßen Schrankvorrichtung;
- Fig. 12: eine teilweise perspektivische Darstellung eines zweiten Ausführungsbeispiels der Schrankvorrichtung;
- Fig. 13: eine perspektivische Darstellung eines Rahmenmoduls erster Art gemäß dem zweiten Ausführungsbeispiel;
- Fig. 14: eine perspektivische Darstellung eines zweiten Rahmenmoduls zweiter Art gemäß dem zweiten Ausführungsbeispiel;
- Fig. 15: eine perspektivische Darstellung eines Rahmenmoduls dritter Art gemäß dem zweiten Ausführungsbeispiel;
- Fig. 16: eine Explosionsdarstellung einer Anordnung zum Ausbilden von Rahmenmodulen erster und zweiter Art gemäß einem weiteren Ausführungsbeispiel;
- Fig. 17: eine perspektivische Darstellung der in Fig. 16 gezeigten Anordnung;
- Fig. 18 u. 19: jeweils eine perspektivische Darstellung eines Rahmenmoduls erster Art gemäß einem weiteren Ausführungsbeispiel; und
- Fig. 20: ein durch ein Ausführungsbeispiel des erfindungsgemäßen Herstellungsverfahrens erhaltenes Möbelstück.

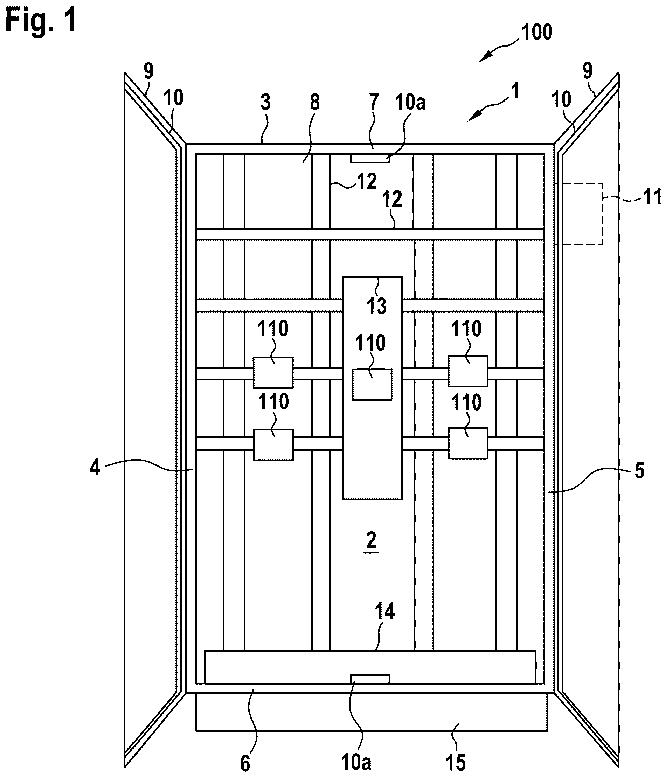

Fig. 1 ist eine Prinzipskizze eines Ausführungsbeispiels einer elektrischen Vorrichtung 100.

Die elektrische Vorrichtung 100 umfasst eine Schrankvorrichtung 1 sowie elektrische Komponenten 110 in Gestalt von Schalt- und Regelungs-, Hydraulik- und/oder Pneumatikkomponenten, die in einem Inneren 2 der Schrankvorrichtung 1 angeordnet sind.

Die Schrankvorrichtung 1 umfasst einen Rahmen 3, der mehrere Rahmenflächen 4 bis 7 in Gestalt einer ersten Seitenfläche 4, einer zweiten Seitenfläche 5, einer Grundfläche 6 und einer Deckenfläche 7 ausbildet. Der Rahmen 3 ist auf einer Rückseite der Schrankvorrichtung 1 durch eine Rückwand 8 abgeschlossen.

Als zusätzliche Komponente des Schrankvorrichtung 1 ist eine exemplarisch als Doppelflügeltür ausgebildete Abschlussvorrichtung 9 schematisch in einem geöffneten Zustand gezeigt. Die Abschlussvorrichtung 9 kann alternativ auch als einzelne Tür, als Wanne, als Rollladen oder als Klappe ausgebildet sein. Die Abschlussvorrichtung 9 weist ein umlaufendes Dichtmittel 10 auf, das in einem geschlossenen Zustand der Abschlussvorrichtung 9 ein Eindringen von Staub und/oder Flüssigkeiten und/oder Fremdkörpern und/oder UV-Strahlung in das Innere 2 der Schrankvorrichtung 1 hemmt. Gezeigt ist außerdem eine am Rahmen 3 angebrachte Schließvorrichtungen 10a der Abschlussvorrichtung 9. Dabei kann es sich im Fall der Doppelflügeltür um Schließhalterungen handeln, in welche ein Türgestänge die Doppelflügeltür im geschlossenen Zustand einrastet.

Als weitere zusätzliche Komponenten sind in Fig. 1 ein Lüfter 11 zum Einblasen von Luft in die und Absaugen von Luft aus der Schrankvorrichtung 1, Montagemittel in Gestalt von Montageschienen 12 und einer Montageplatte 13 sowie eine Wasserschutzvorrichtung 14 dargestellt. An den Montageschienen 12 und der Montageplatte 13 sind die rein schematisch als Block skizzierten elektrischen Komponenten 110 befestigt. Die ebenfalls nur als Block skizzierte Wasserschutzvorrichtung 14 ist ein sog. Wasserschutzbag und verhindert das Eindringen stehenden Wassers aus der Umgebung der Schrankvorrichtung 1 in deren Inneres 2, was beispielsweise dem Schutz der elektrischen Komponenten 110 bei einem Hochwasserereignis dient.

In Fig. 1 ist außerdem ein zusätzliches Standmittel 15 der Schrankvorrichtung 1 gezeigt, welches exemplarisch als Sockel dargestellt ist, gemäß alternativen Ausgestaltungen des Ausführungsbeispiels aber Rollen oder Stützen umfassen kann.

Im Folgenden werden Ausführungsbeispiele der Schrankvorrichtung 1, wie sie bei der in Fig. 1 gezeigten elektrischen Vorrichtung 100 eingesetzt werden können näher beschrieben. Dabei sind gleiche oder gleichwirkende Komponenten mit identischen Bezugszeichen versehen.

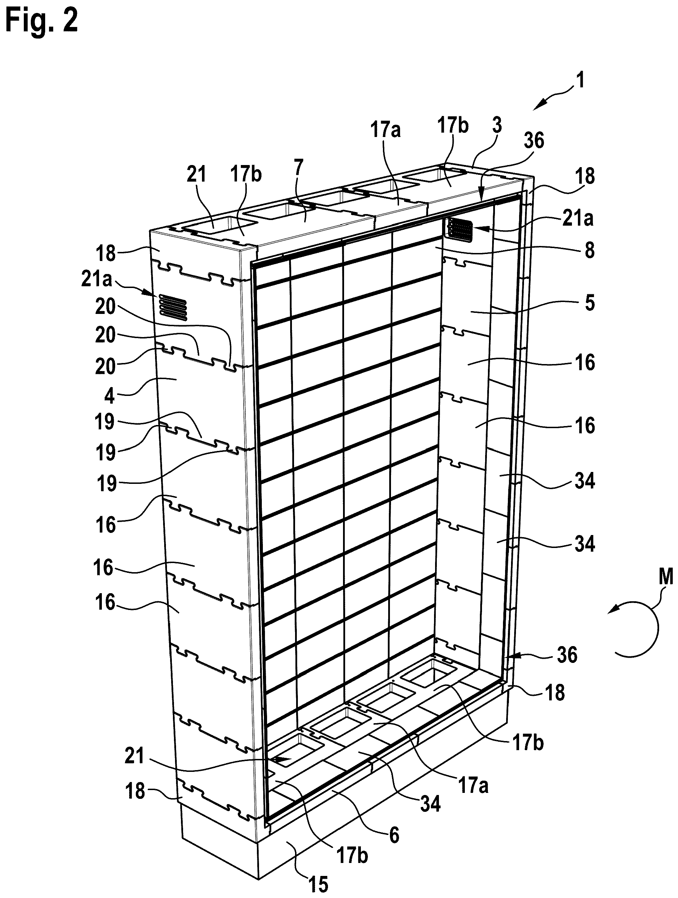

Fig. 2 ist eine perspektivische Darstellung eines ersten Ausführungsbeispiels der Schrankvorrichtung 1, wobei aus Gründen der Übersichtlichkeit auf die Darstellung einiger der in Fig. 1 gezeigten Komponenten verzichtet wurde. Gezeigt ist in Fig. 2 eine seitlich versetzt von der Vorderseite aus betrachtete Sicht in das Innere 2 der Schrankvorrichtung 1.

Die Rahmenflächen 4 bis 7 des Rahmens 3 sind jeweils aus mehreren Rahmenmodulen 16, 17a, 17b, 18 gebildet. Jedes Rahmenmodule 16, 17a, 17b, 18 weist mehrere, im vorliegenden Ausführungsbeispiel drei, in eine umfänglich um den Rahmen 3 verlaufende Montagerichtung M abstehende und hinterschnittene Vorsprünge 19 sowie eine, in diesem Ausführungsbeispiel gleiche, Anzahl von Ausnehmungen 20 auf. Die Montagerichtung M verläuft hier exemplarisch von der Vorderseite aus betrachtet gegen den Uhrzeigersinn. Jede Ausnehmung 20 eines jeweiligen Rahmenmoduls 16, 17a, 17b, 18 ist gegengleich zu einem der Vorsprünge 19 des dem jeweiligen Rahmenmodul 16, 17a, 17b, 18 entlang der Montagerichtung M nachfolgenden Rahmenmoduls ausgebildet und hintergreift diesen Vorsprung 19 formschlüssig. Die Rahmenmodule 16, 17a, 17b, 18 sind jeweils aus einem Fasermaterial, vorliegend aus einem Vollholzmaterial, gebildet.

Die Form der Vorsprünge 19 und Ausnehmungen 20 erinnert im hier gezeigten Beispiel an jene von Puzzleteilen. Es sind jedoch auch andere, eine Hinterschneidung aufweisende Formen denkbar, wie z.B. eine Schwalbenschwanzverbindung.

Wie in Fig. 1 ferner zu sehen ist, sind Rahmenmodule erster Art 16, erste Rahmenmodule zweite Art 17a, zweite Rahmenmodule zweiter Art 17b sowie Rahmenmodule dritter Art 18, die jeweils eines von vier Eckstücken des Rahmens 3 bilden, vorgesehen. Die Seitenflächen 4, 5 sind jeweils durch mehrere Rahmenmodule erster Art 16 und zwei der Rahmenmodule dritter Art 18 ausgebildet. Die Grundfläche 6 und die Deckenfläche 7 sind jeweils durch ein erstes Rahmenmodul zweiter Art 17a, zwei zweite Rahmenmodule zweiter Art 17b sowie zwei der Rahmenmodule dritter Art 18 ausgebildet. Dadurch dass die Rahmenmodule zweiter Art 17a, 17b in unterschiedlichen Längen vorliegen, können Schaltschränke unterschiedlicher Größe ausgebildet werden, sodass gemäß alternativen Ausgestaltungen des ersten Ausführungsbeispiels auch nur erste Rahmenmodule erster Art 17a, nur zweite Rahmenmodule zweiter Art 17b oder andere Kombinationen aus ersten und zweiten Rahmenmodulen zweiter Art 17a, 17b vorgesehen sein können.

Die Rahmenmodule zweiter Art 17a, 17b weisen zudem Durchgangsöffnungen 21 auf, die zur Durchführung von Leitungen zum Anschluss oder zur Unterstützung eines Anschlusses an die Komponenten 110 in das Innere 2 der Schrankvorrichtung 1 dienen (siehe Fig. 1). Dabei ist in den ersten Rahmenmodulen erster Art 17a eine Durchgangsöffnung 21 vorgesehen. In den Rahmenmodulen zweiter Art 17b sind zwei Durchgangsöffnungen 21 vorgesehen. Die Durchgangsöffnungen 21 haben eine abgerundet mehreckige, hier abgerundet rechteckige, Form.

Gezeigt sind ferner Öffnungen 21a in zweien der Rahmenmodule erster Art 16, an welchen der Lüfter 11 (siehe Fig. 1) befestigbar oder befestigt ist. Alternativ oder zusätzlich kann an die Öffnung 21a ein - nicht gezeigtes - Löschgerät und/oder Meldegeräts und/oder Markierungsschild (z.B. Bezeichnungsschild, Typenschild oder Werbeschild) angebracht sein.

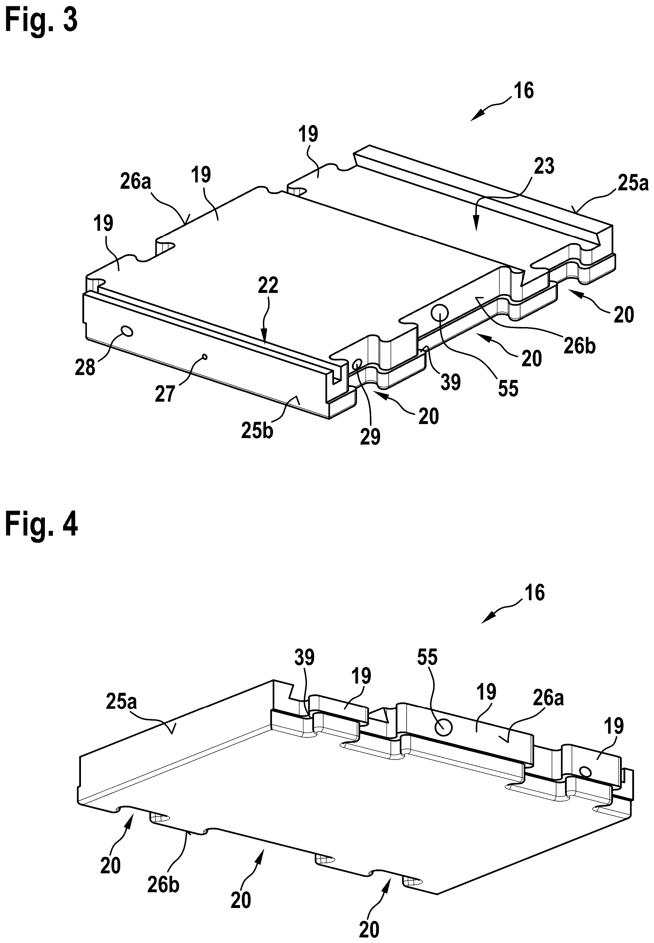

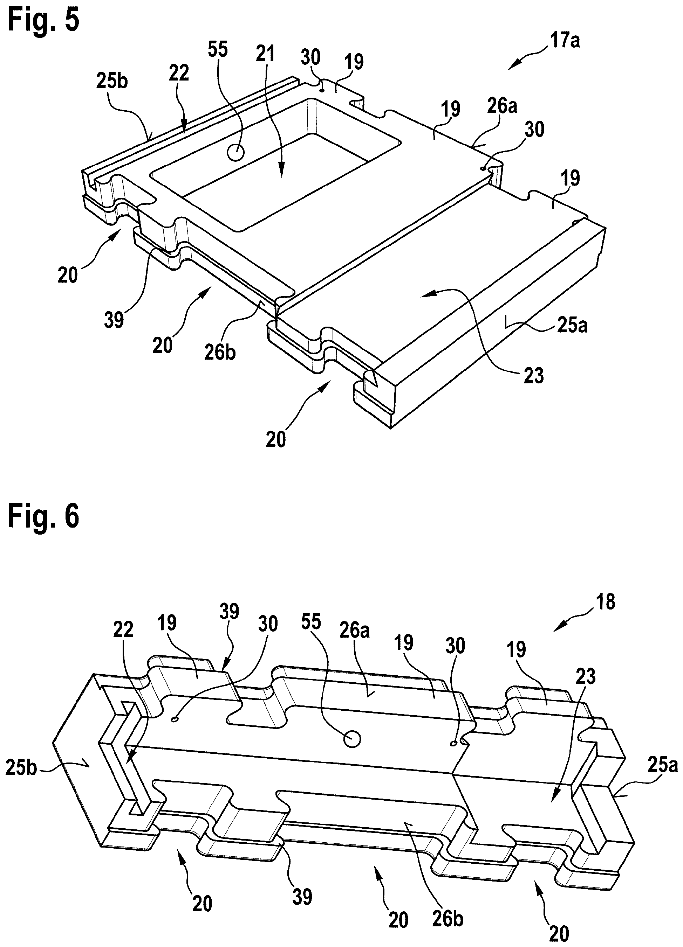

Fig. 3 bis Fig. 6 sind jeweils eine perspektivische Ansicht eines Rahmenmoduls 16, 17a, 18, wobei Fig. 3 und Fig. 4 jeweils ein Rahmenmodul erster Art 16 zeigen, Fig. 5 ein erstes Rahmenmodul zweiter Art 17a und Fig. 6 ein drittes Rahmenmodul 18 zeigt. Die Ausführungen zum ersten Rahmenmodul zweiter Art 17a lassen sich dabei unter Berücksichtigung der unterschiedlichen Länge und Anzahl der Durchgangsöffnungen 21 auf die zweiten Rahmenmodule zweiter Art 17b übertragen.

Im vorliegenden Ausführungsbeispiel weist jedes Rahmenmodul drei Vorsprünge 19 und drei gegengleiche Ausnehmungen 20 auf, von denen der mittlere Vorsprung 19 und die mittlere Ausnehmung 20 breiter als die zwei benachbarten Vorsprünge 19 und Ausnehmungen 20 ausgebildet sind.

Die Rahmenmodule 16, 17a, 17b, 18 weisen jeweils einen ersten Nutabschnitt 22 auf. Der erste Nutabschnitt 22 befindet sich weiter an der Rückseite als an der Vorderseite. Daneben weist jedes Rahmenmodul 16, 17a, 17b, 18 einen zweiten Nutabschnitt 23 auf.

Der zweite Nutabschnitt 23 befindet sich weiter an der Vorderseite als an der Rückseite. Der zweite Nutabschnitt 23 ist an seinen Wänden in Tiefenrichtung nach Art einer Schwalbenschwanzverbindung abgeschrägt ausgebildet. Außerdem ist der zweite Nutabschnitt 23 breiter als der erste Nutabschnitt 22 ausgebildet.

Zu sehen sind in Fig. 3 bis Fig. 6 auch Kantenflächen 25a, 25b der Rahmenmodule 16, 17a, 17b, 18, wobei in Fig. 3 die erste Kantenfläche 25a an der Vorderseite verdeckt ist und in Fig. 4 und Fig. 5 jeweils die zweite Kantenfläche 25b an der Rückseite verdeckt ist. Außerdem weist jedes Rahmenmodul 16, 17a, 17b, 18 zwei Kontaktflächen 26a, 26b zu seinen benachbarten Rahmenmodul 16, 17a, 17b, 18 auf. Die erste Kontaktfläche 26a ist dabei an der Seite der Vorsprünge 19 vorgesehen und in Fig. 3 und Fig. 4 verdeckt. Die zweite Kontaktfläche 26b ist an der Seite der Ausnehmungen 20 vorgesehen. Eine jeweilige Kontaktfläche 26a, 26b umfasst dabei alle seitlichen Abschnitte des Rahmenmoduls 16, 17a, 17b, 18, die einem anderen Rahmenmodul 16, 17a, 17b, 18 gegenüberliegen.

In den zweiten Kantenflächen 25b einiger Rahmenmodule 16, 17a, 17b, 18, hier exemplarisch nur in den Rahmenmodulen erste Art 16, ist jeweils eine Bohrung 27 vorgesehen, in welche ein Sensor (nicht gezeigt) eingesteckt oder einsteckbar ist und ein Befestigungsmittel (nicht gezeigt) zur Befestigung der Schrankvorrichtung 1, z.B. an einer Wand, einsteckbar oder eingesteckt ist.

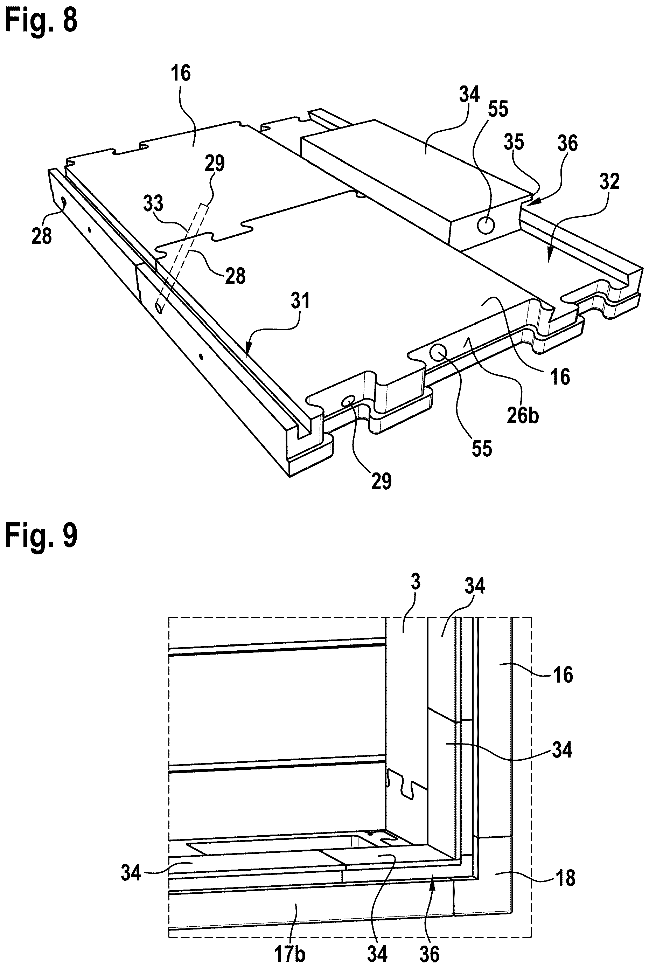

Zu sehen ist in Fig. 3 ferner, dass die Rahmenmodule erster Art 16 eine sich schräg von der zweiten Kantenfläche 25b zur ersten Kontaktfläche 26a erstreckende Durchgangsbohrung 28 sowie eine sich parallel dazu von der zweiten Kontaktfläche 26b aus erstreckende Sackbohrung 29 aufweisen, deren Funktion weiter unten mit Bezug auf Fig. 8 näher erläutert wird.

In Fig. 5 ist ferner zu erkennen, dass die Rahmenmodule zweiter Art 17a, 17b Bohrungen 30 aufweisen, die sich jeweils vom Inneren 2 der Schrankvorrichtung 1 in das Rahmenmodul zweiter Art 17a, 17b erstrecken. Bei den ersten Rahmenmodulen zweiter Art 17a ist ein Paar von sich bezüglich der Tiefenrichtung gegenüberliegenden Bohrungen 30 vorgesehen. Bei den zweiten Rahmenmodulen zweiter Art 17b sind zwei Paare von sich bezüglich der Tiefenrichtung gegenüberliegenden Bohrungen 30 vorgesehen, wobei die Paare bezüglich der Montagerichtung beabstandet sind. In den Bohrungen 30 sind die sind die Montageschienen 12 (siehe Fig. 1) befestigt.

Wie in Fig. 6 zu sehen ist, bilden die Rahmenmodule dritter Art 18 einen rechten Innenwinkel aus, um die Eckstücke des Rahmens 3 zu formen. Außerdem sind auch bei den Rahmenmodulen dritter Art 18 die Bohrungen 30 in jenen Abschnitten vorgesehen, die die Grundfläche 6 bzw. die Deckenfläche 7 ausbilden, vorgesehen.

Außerdem sind ein jeweiliges Rahmenmodul 16, 17a, 17b, 18 und ein diesem nachfolgendes Rahmenmodul 16, 17a, 17b, 18 an ihren einander gegenüberliegenden Kontaktflächen 26a, 26b mit sich entlang der Tiefenrichtung erstreckenden, gegengleich zueinander ausgebildeten Absätzen 39 versehen, was die Dichtigkeit der Schrankvorrichtung 1 weiter verbessert.

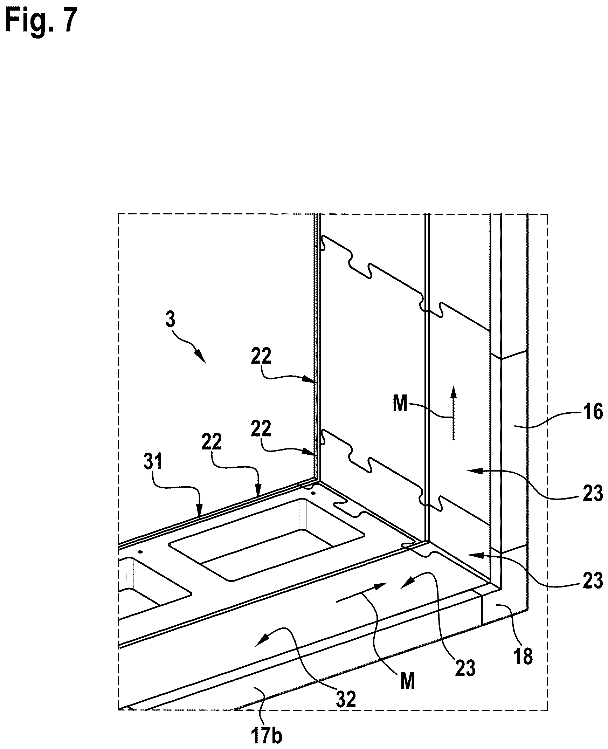

Fig. 7 ist eine perspektivische Detailansicht des Rahmens 3.

Dabei ist zu erkennen, dass die ersten Nutabschnitte 22 der Rahmenmodule 16, 17a, 17b, 18 jeweils abschnittsweise eine entlang der Montagerichtung M umlaufende erste Nut 31 des Rahmens 3 ausbilden, in welche die Rückwand 8 (siehe Fig. 2) zum Haltern eingesetzt ist.

Entsprechend bilden die zweiten Nutabschnitte 23 der Rahmenmodule 16, 17a, 17b, 18 jeweils abschnittsweise eine entlang der Montagerichtung M umlaufende zweite Nut 32 in Gestalt einer Schrägnut aus. Ersichtlich ist die zweite Nut 32 bezüglich der Tiefenrichtung breiter als die erste Nut 31 und liegt näher an der Vorderseite als die erste Nut 31.

Fig. 8 ist eine perspektivische Ansicht zweier verbundener Rahmenmodule erster Art 16 gemäß dem ersten Ausführungsbeispiel.

Die Durchgangsbohrung 28 und die Sackbohrung 29 von zwei entlang der Montagerichtung aufeinanderfolgenden Rahmenmodulen erster Art 16 bilden einen durchgehenden Kanal 33. In diesen ist von der zweiten Kantenfläche 25b aus ein Fixiersplint (nicht gezeigt) eingeführt, durch den die Rahmenmodule erster Art 16 gesichert sind.

Die Schrankvorrichtung 1 weist ferner mehrere Verbindungstücke 34 (siehe auch Fig. 2) auf, die in die zweite Nut 32 eingesetzt sind und von denen in Fig. 8 lediglich eines dargestellt ist. Die Verbindungsstücke 34 sind überlappend mit zwei der Rahmenmodule 16, 17a, 17b, 18 in die zweite Nut 32 eingesetzt. Dadurch erhöhen die Verbindungsstücke 34 die Stabilität des Rahmens 3. Da die Verbindungsstücke 34 entlang der Montagerichtung M dieselbe Länge aufweisen, erstreckt sich auch ein Verbindungsstück 34 vollständig entlang eines jeweiligen zweiten Rahmenmoduls zweiter Art 17b. Das heißt, dass dieses Verbindungsstück 34 mit keinem anderen Rahmenmodul 16, 17a, 17b, 18 überlappt.

Wie in Fig. 8 ferner zu sehen ist, weisen die Verbindungsstücke 34 jeweils einen zur Vorderseite weisenden Überstand 35 auf. Zwischen den Überständen 35 und dem Rahmen 3 ist so eine zur Vorderseite offene, umlaufende dritte Nut 36 ausgebildet (siehe auch Fig. 2). In die dritte Nut 36 greift das Dichtmittel 10 der Abschlussvorrichtung 9 (siehe Fig. 1) ein, um ein Eindringen von Staub, Flüssigkeiten und Fremdkörpern in das Innere 2 der Schrankvorrichtung 1 zu hemmen. Darüber hinaus ist zur Einhaltung der Dichtigkeitsanforderungen der einschlägigen Normen vorgesehen, dass die Rahmenmodule 16, 17a, 17b, 18 jeweils ein weiteres Dichtmittel (nicht gezeigt) an den Kontaktflächen 26a, 26b aufweisen. Dieses Dichtmittel kann zusätzlich auch dem UV-Schutz dienen.

Fig. 9 ist eine perspektivische Ansicht eines durch ein Rahmenmodul dritter Art 18 mit einem Rahmenmodul zweiter Art 17b verbundenen Rahmenmoduls erster Art 16 gemäß dem ersten Ausführungsbeispiel. Zu sehen ist dabei, dass auch mit dem Rahmenmodul dritter Art 18 zwei Verbindungsstücke 34 überlappen, um den Rahmen 3 zu stabilisieren und die dritte Nut 36 auszubilden.

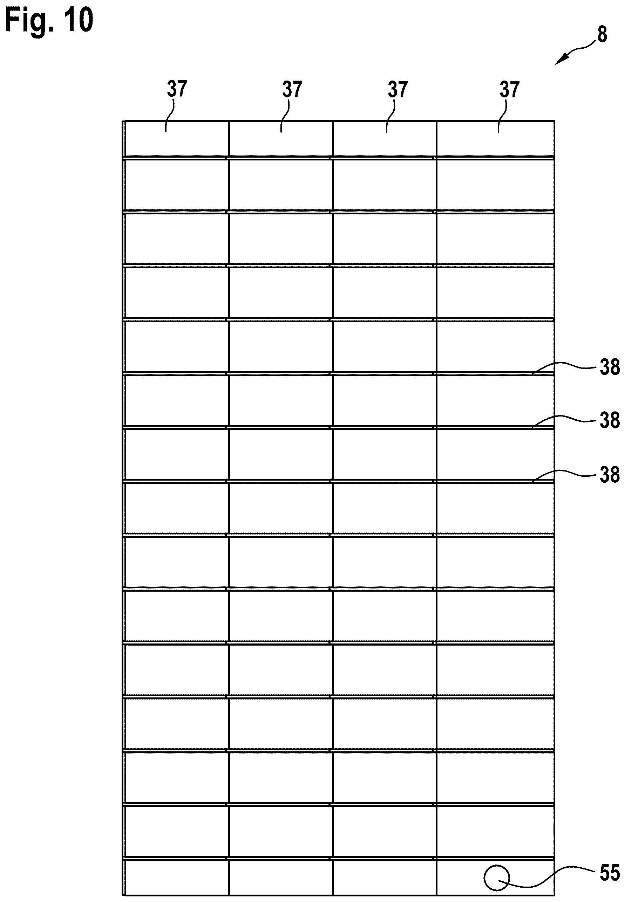

Fig. 10 ist eine Draufsicht auf die Rückwand 8 gemäß dem ersten Ausführungsbeispiel.

Die Rückwand 8 ist aus mehreren Rückwandelementen 37 gebildet, die sich jeweils von der Grundfläche 6 zur Deckenfläche 7 erstrecken (siehe Fig. 2). Im Detail ist für zwei gegenüberliegende erste Rahmenmodule zweiter Art 17a ein Rückwandelement 37 vorgesehen. Für zwei gegenüberliegende zweite Rahmenmodule zweiter Art 17b sind zwei Rückwandelemente 37 vorgesehen.

Die Rückwand 8 bzw. jedes Rückwandelement 37 ist mit Sollbruchstellen 38 versehen, die sich in Richtung von einer Seitenfläche 4 zur anderen Seitenfläche 5 erstrecken (siehe Fig. 2). Die Sollbruchstellen 38 ermöglichen eine zügige Zerkleinerung der Rückwand 8 nach Ende der Nutzung der Schrankvorrichtung 1, sodass die zerkleinerte Rückwand einfach transportiert und in einen Ofen zur thermischen Verwertung eingebracht werden kann.

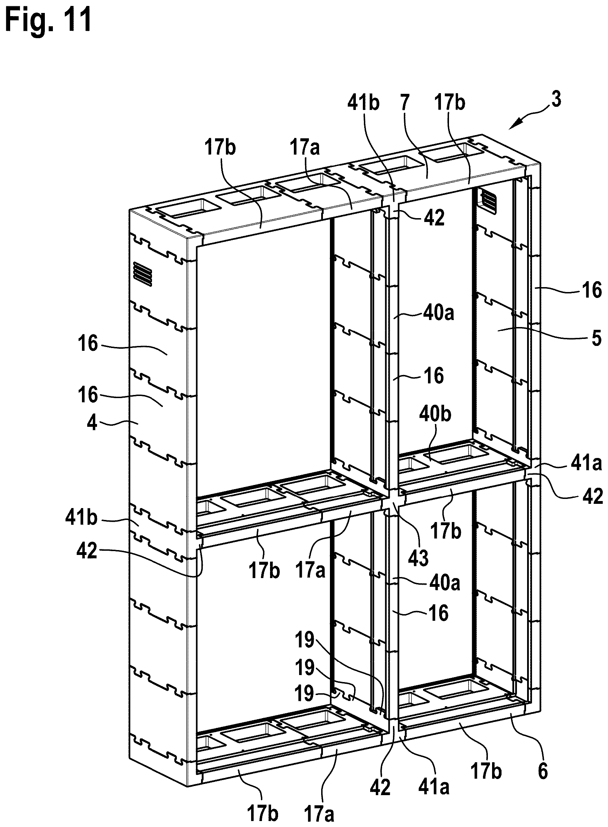

Fig. 11 ist eine perspektivische Ansicht eines Rahmens 3 mit Innenwänden 40a, 40b eines zweiten Ausführungsbeispiels einer Schrankvorrichtung 1. Dabei werden im Folgenden nur die Unterschiede gegenüber dem ersten Ausführungsbeispiel beschrieben, sodass sich im Übrigen alle Ausführung zum ersten Ausführungsbeispiel auf das zweite Ausführungsbeispiel übertragen lassen.

Gemäß dem dritten Ausführungsbeispiel ist vorgesehen, dass die Schrankvorrichtung 1 zwei sich parallel zu den Seitenwänden 4, 5 erstreckende Innenwände 40a und zwei sich parallel zu der Grundfläche 6 bzw. zu der Deckenfläche 7 erstreckende Innenwände 40b aufweist. Dabei sind die sich parallel zu den Seitenflächen 4, 5 erstreckenden Innenwände 40a aus Rahmenmodulen erster Art 16 gebildet und die sich parallel zur Grundfläche 6 erstreckenden Innenwände 40b aus Rahmenmodulen zweiter Art 17a, 17b gebildet. Um die Innenwände 40a, 40b mit dem Rahmen zu verbinden, ist dieser ferner durch T-förmige Rahmenmodule vierter Art 41a, 41b ausgebildet.

Die Rahmenmodule vierter Art 41a, 41b weisen einen sich senkrecht zur Montagerichtung M und zur Tiefenrichtung erstreckenden Abzweigabschnitt 42 auf, der jeweils mit einer der Innenwände 40a, 40b verbunden ist. Dabei sind erste Rahmenmodule vierter Art 41a vorgesehen, deren Abzweigabschnitt 42 Vorsprünge 19 entsprechend den Vorsprüngen der Rahmenmodule erster Art 16 bzw. zweiter Art 17a, 17b aufweisen und zweite Rahmenmodule vierter Art 41b vorgesehen, deren Abzweigabschnitt 42 Ausnehmungen 20 entsprechend den Rahmenmodulen erster Art 16 bzw. zweiter Art 17a, 17b aufweisen. Dabei lassen sich im Übrigen die Ausführungen zu den Rahmenmodulen erster bis dritter Art 16, 17a, 17b, 18 auf die Rahmenmodule vierter Art 41 übertragen.

Die Innenwände 40a, 40b sind untereinander mittels eines kreuzförmigen Verbindungsmoduls 43 verbunden. Das Verbindungsmodul 43 weist ebenfalls Vorsprünge 19 und Ausnehmungen 20 für die durch das Verbindungsmodul 43 verbundenen Rahmenmodule 16, 17a, 17b auf.

Die Anzahl und Position der Innenwände 40a, 40b ist dabei exemplarisch. Es kann gemäß weiteren Ausführungsbeispielen auch eine weitere oder abweichende Untergliederung des Rahmens 3 durch zusätzliche oder weniger Innenwände 40a, 40b vorgesehen sein, wobei eine entsprechende Anzahl von Rahmenmodulen vierter Art 41 und Verbindungsmodulen 43 vorgesehen ist. Wenn lediglich eine sich parallel zur den Seitenflächen 4, 5 erstreckende Innenwand 40a und eine sich parallel zur Grundfläche 6 erstreckende Innenwand 40 verbunden werden sollen, ist dafür ein Rahmenmodul dritter Art 18 vorgesehen sein.

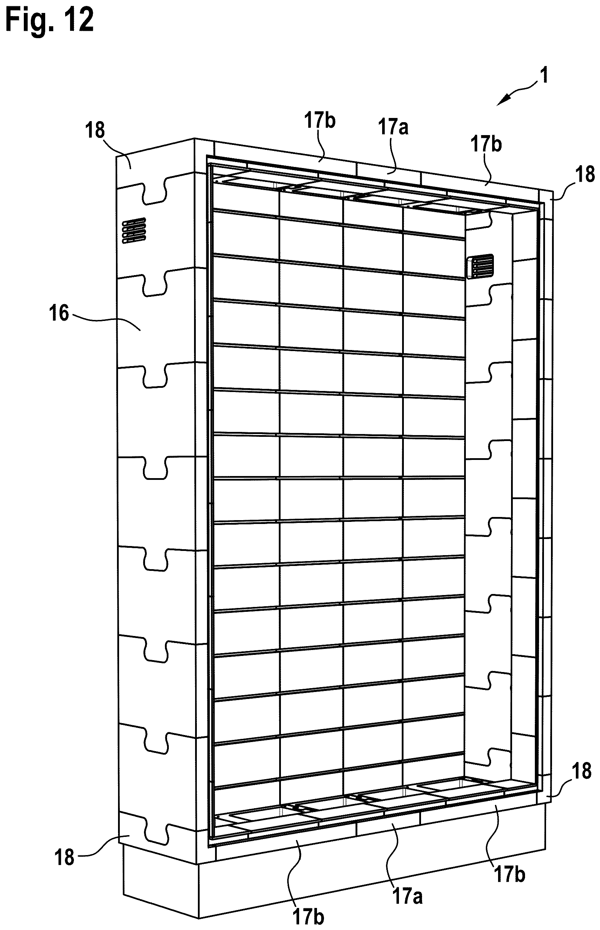

Die Fig. 12 bis 15 betreffen ein drittes Ausführungsbeispiel einer Schrankvorrichtung 1. Dabei werden im Folgenden nur die Unterschiede gegenüber dem ersten Ausführungsbeispiel beschrieben, sodass sich im Übrigen alle Ausführung zum ersten Ausführungsbeispiel auf das dritte Ausführungsbeispiel übertragen lassen.

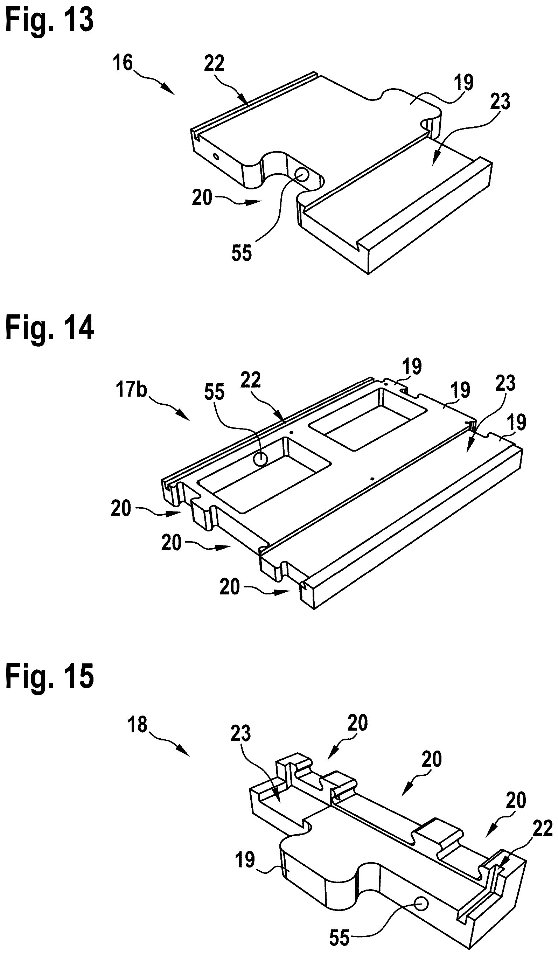

Fig. 12 ist eine teilweise perspektivische Darstellung des zweiten Ausführungsbeispiels der Schrankvorrichtung 1. Fig. 13 bis 15 sind perspektivische Darstellungen eines Rahmenmoduls erster Art 16, eines zweiten Rahmenmoduls zweiter Art 17b und eines Rahmenmoduls dritter Art 18 gemäß dem zweiten Ausführungsbeispiel.

Das zweite Ausführungsbeispiel unterscheidet sich in der Ausgestaltung der Rahmenmodule erster und dritter Art 16, 18. Wie Fig. 13 zu entnehmen ist, weisen die Rahmenmodule erster Art 16 nur einen Vorsprung 19 und eine Ausnehmung 20 auf, die im Wesentlichen mittig bezüglich der Tiefenrichtung angeordnet sind. Das in Fig. 14 gezeigte zweite Rahmenmodul zweiter Art 17b entspricht jenem des ersten Ausführungsbeispiels. Fig. 15 zeigt, dass Rahmenmodule dritter Art 18 gemäß dem zweiten Ausführungsbeispiel eine unterschiedliche Anzahl von Vorsprüngen 19 und Ausnehmungen 20 entsprechend deren Anzahl bei den Rahmenmodulen erster Art 16 und bei den Rahmenmodulen zweiter Art 17a, 17b aufweisen. Exemplarisch sind die Rahmenmodule 16, 17a, 17b, 18 in den Fig. 13 bis 15 ohne Absätze 39 (siehe Fig. 3 bis Fig. 6) dargestellt. Gemäß einem weiteren Ausführungsbeispiel sind jedoch auch bei den Rahmenmodulen 16, 17a, 17b, 18 Absätze 39 vorgesehen.

Gemäß weiteren Ausführungsbeispielen können selbstverständlich auch Innenwände 40a, 40b beim einer Schrankvorrichtung gemäß dem dritten Ausführungsbeispiel vorgesehen sind.

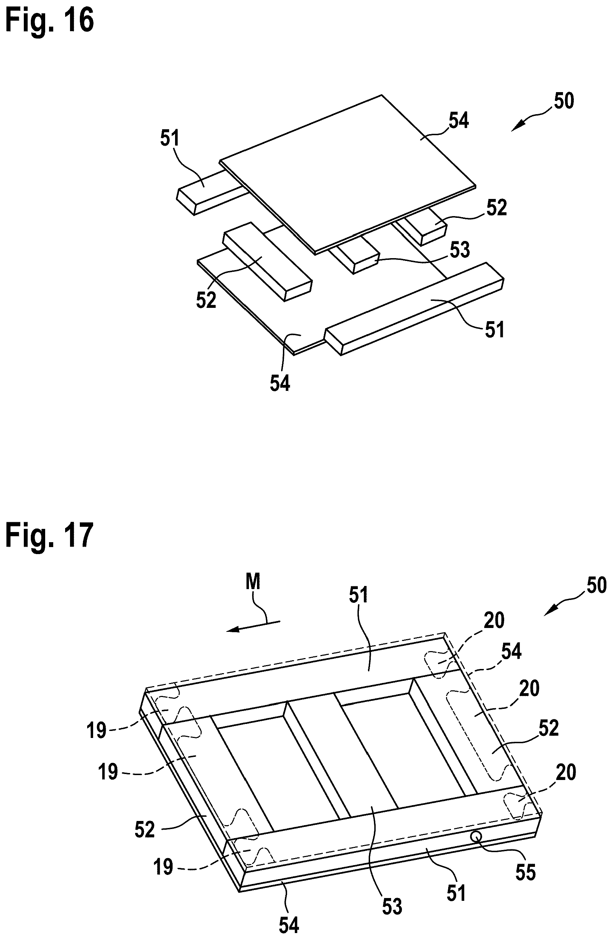

Fig. 16 und Fig 17 zeigen schematisch eine Anordnung 50 zur Fertigung eines Rahmenmoduls erster oder zweiter Art 16, 17a, 17b gemäß einem weiteren Ausführungsbeispiel , wobei Fig. 16 eine Explosionsdarstellung und Fig. 17 eine perspektivische Ansicht ist.

Die Anordnung 50 weist zwei sich entlang der Montagerichtung M erstreckende erste Passleisten 51 und zwei sich entlang der Tiefenrichtung erstreckende zweite Passleiten 52 und eine oder mehrere dritte Passleisten 52 auf. Die zweiten und dritten Passleisten 52, 53 erstrecken sich zwischen den ersten Passleisten 51, wobei die dritte Passleiste 53 zwischen den zweiten Passleiten 52 angeordnet ist. Es sind ferner zwei plattenartige Deckelemente 54 vorgesehen, zwischen denen die ersten und zweiten Passleisten 51, 52 bündig angeordnet sind. In Hohlräumen zwischen den Passleisten 51, 52, 53 können Feuerlöschmittel (nicht gezeigt) angeordnet sein.

Wie Fig. 17 illustriert, sind die Vorsprünge 19 und die Ausnehmungen 20 durch Entfernen, z.B. Fräsen, entsprechender Abschnitte der Deckelemente 54, der ersten Passleiten 51 und der zweiten Passleiten 52 ausgebildet.

Gemäß weiteren Ausführungsbeispielen, die im Übrigen den vorangegangen beschriebenen Ausführungsbeispielen entsprechen, ist das Fasermaterial ein Furnierholzmaterial oder ein Verbundmaterial. Das Verbundmaterial kann durch additiven Druck gefertigt sein. Die Einzelfasern können Holzfasern oder Textilfasern, wie Baumwoll-, Woll-, Seiden-, Leinen- oder Hanffasern, sein oder umfassen.

Bei allen vorgenannten Ausführungsbeispielen kann zusätzlich vorgesehen sein, dass ein jeweiliges Rahmenmodul 16, 17a, 17b, 18, 41a, 41b und/oder die Rückwand 8 und/oder ein jeweiliges Verbindungsstück 34 oberflächenbehandelt ist bzw. sind, beispielsweise durch ein spanendes Fertigungsverfahren wie Schleifen oder Fräsen und/oder durch Beschichten, z.B. mit einem Lack oder einer Lasur. Es kann eine, beispielweise kreisförmige, Aussparung 55 der Oberflächenbehandlung vorgesehen sein, wie sie in Fig. 3 bis Fig. 6, Fig. 8, Fig. 10, Fig. 13 bis Fig. 15, Fig. 17 bis Fig. 19 gezeigt ist. Im Bereich der Aussparung 55 liegt die ursprüngliche, bei Holz typischerweise die natürliche, Faserstruktur frei und kann, beispielsweise durch eine Bilderfassung und/oder Tasterfassung, erfasst und datenverarbeitet werden. Da das Fasermaterial im Bereich der Aussparung 55 eine individuelle Faserstruktur aufweist, ist so eine Identifizierung und Nachverfolgung der die Aussparung aufweisenden Komponente möglich. Dadurch kann auf das Aufbringen herkömmlicher Aufkleber mit Barcodes verzichtet werden.

Gemäß weiteren Ausführungsbeispielen kann die Schrankvorrichtung 1 auch mehrere Deckenflächen 7 auf verschiedenen Höhen aufweisen, sodass der Rahmen dann nicht wie zuvor gezeigt viereckig, sondern allgemein ein polygonal mit n Seiten ist, wobei n ≥ 5. Für jede weitere Deckenfläche ist dann eine weitere Seitenfläche und weiteres Rahmenmodul dritter Art 18 vorgesehen, wobei diese Rahmenmodule dann auch einen rechten Außenwinkel ausbilden können.

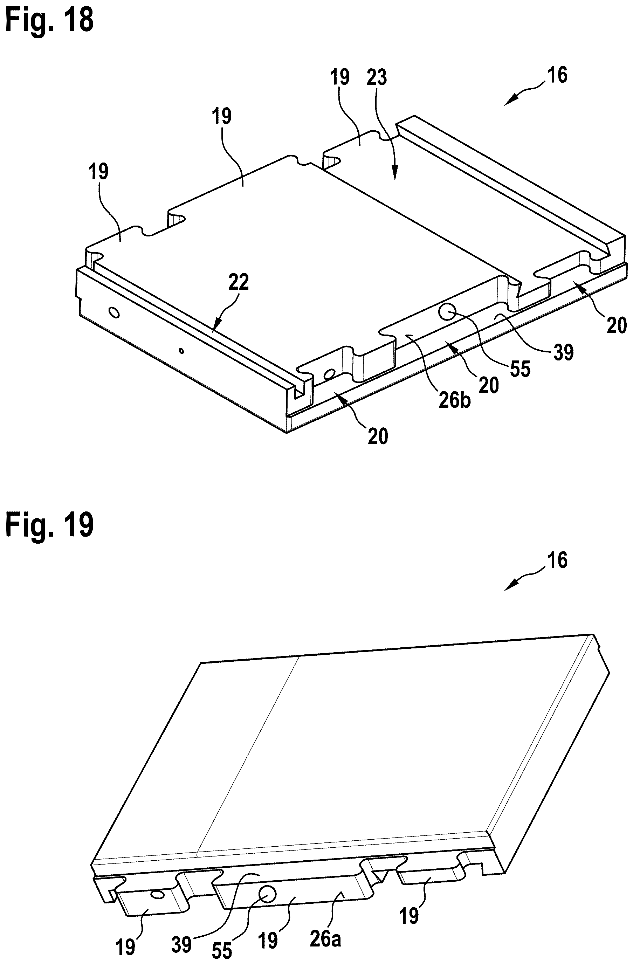

Fig. 18 und Fig. 19 zeigen jeweils eine perspektivische Darstellung eines Rahmenmoduls erster Art 16 gemäß einem weiteren Ausführungsbeispiel.

Dieses Ausführungsbeispiel, das im Übrigen einem der zuvor beschriebenen Ausführungsbeispiele entspricht, unterscheidet durch die Ausgestaltung der Absätze 39, die exemplarisch anhand des Rahmenmoduls erster Art 16 beschrieben wird und entsprechend auf die anderen Rahmenmodule 17a, 17b, 18, 41a, 41b übertragen werden kann.

Beim vorliegenden Ausführungsbeispiel erstreckt sich der Absatz 39 über die Ausnehmungen 20, sodass der Absatz 39 die Ausnehmung 20 und den durch sie hintergriffenen Vorsprung 19 (in Fig. 18 und Fig. 19 nicht zu sehen) von der dem Inneren 2 abgewandten Seite des Rahmenmoduls 16, 17a, 17b, 18, 41a, 41b verdeckt. Entsprechend ist der Absatz 39 an der vorsprungseitigen Kontaktfläche 26a bis hinter die Vorsprünge zurückgesetzt.

Im Folgenden werden Ausführungsbeispiele eines Verfahrens zur Herstellung eines Möbelstücks 200 oder mehrerer Möbelstücke 200 unter Verwendung von elektrischen Vorrichtungen 100 bzw. Schrankvorrichtungen 1 gemäß einem der zuvor beschriebenen Ausführungsbeispiele erläutert.

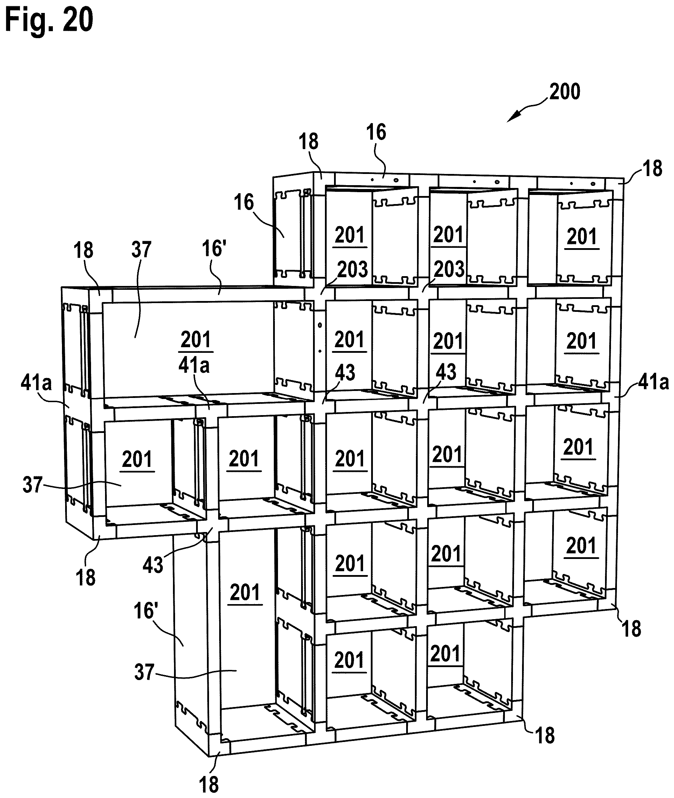

Fig. 20 ist eine perspektivische Darstellung eines durch das erste Ausführungsbeispiel des Herstellungsverfahrens erhaltenen Möbelstücks 200, welches hier eine Vielzahl von Korpussen 201 aufweist.

Gemäß dem ersten Ausführungsbeispiel umfasst das Verfahren einen ersten Schritt des Bereitstellens einer oder mehrerer elektrischen Vorrichtung 100 (siehe Fig. 1), die sich auch hinsichtlich der Anzahl der Rahmenmodule 16, 17a, 17b, 18, 41a, 41b unterscheiden können.

Daran schließt ein Schritt des Demontierens der elektrischen Komponenten 110, der Abschlussvorrichtung 9 und der Montagemittel, insbesondere der Montageschienen 12 und der Montageplatten 13, an.

In einem weiteren Schritt wird der Rahmen 3 in die Rahmenmodule 16, 17a, 17b, 18, 41a, 41b zerlegt.

In einem weiteren Schritt wird ein Teil der durch das Zerlegen des Rahmens 3 erhaltenen Rahmenmodule 16, 17a, 17b, 18, 41a, 41b zum Ausbilden der Korpusse 201 des Möbelstücks 200 zusammengesetzt, wobei die Ausnehmung eines jeweiligen zum Zusammensetzen des Korpus verwendeten Rahmenmoduls 16, 17a, 17b, 18, 41a, 41b den Vorsprung 19 des dem jeweiligen Rahmenmodul entlang einer Korpusmontagerichtung nachfolgenden Rahmenmoduls 16, 17a, 17b, 18 formschlüssig hintergreift. Zusätzlich werden in diesem Schritt Verbindungsmodule 43 verwendet, um die mehreren Korpusse 201 miteinander zu verbinden. Sofern durch das Zerlegen keine Rahmenmodule vierter Art 41a, 41b und/oder keine Verbindungsmodule 43 erhalten werden, z.B. weil diese wie im ersten Ausführungsbeispiel der Schrankvorrichtung 1 nicht vorgesehen sind, werden diese zusätzlich bereitgestellt. In Fig. 20 ist dabei ein Möbelstück 200 gezeigt, bei dem auch Rahmenmodule erster Art 16' verwendet werden, die länger als die in den vorangegangenen Ausführungsbeispielen gezeigten Rahmenmodule erster Art 16 sind.

Eine Rückwand des Möbelstücks 200 ist dabei aus den Rückwandelementen 37 der Schrankvorrichtung 1, die ggf. an den Sollbruchstellen 38 an die Größe eines jeweiligen Korpus 201 angepasst sind, gebildet.

Gemäß einem zweiten Ausführungsbeispiel des Herstellungsverfahrens wird ein Möbelstück 200 mit lediglich einem Korpus 201 ausgebildet. In diesem Fall kann auf die Rahmenmodule vierter Art 41a, 41b und auf die Verbindungsmodule 43 verzichtet werden.

## Patentansprüche

1. Schrankvorrichtung (1) für elektrische Installationen und/oder Regelungen, wobei die Schrankvorrichtung (1) eine Vorderseite und eine der Vorderseite bezüglich einer Tiefenrichtung gegenüberliegende Rückseite hat und aufweist:
- einen Rahmen (3), der mehrere Rahmenflächen (4, 5, 6, 7) ausbildet; und
- eine Rückwand (8), die den Rahmen (3) auf der Rückseite abschließt;
**dadurch gekennzeichnet, dass**
die Rahmenflächen (4, 5, 6, 7) jeweils aus mehreren aus einem Fasermaterial gebildeten Rahmenmodulen (16, 17a, 17b, 18, 41a, 41b) gebildet sind, die jeweils wenigstens einen in eine umfänglich um den Rahmen (3) verlaufende Montagerichtung (M) abstehenden, hinterschnittenen Vorsprung (19) und wenigstens eine Ausnehmung (20) aufweisen, wobei die Ausnehmung (20) eines jeweiligen Rahmenmoduls (16, 17a, 17b, 18, 41a, 41b) gegengleich zum wenigstens einen Vorsprung (19) des dem jeweiligen Rahmenmodul (16, 17a, 17b, 18, 41a, 41b) entlang der Montagerichtung (M) nachfolgenden Rahmenmoduls (16, 17a, 17b, 18, 41a, 41b) ausgebildet ist und den wenigstens einen Vorsprung (19) formschlüssig hintergreift.

2. Schrankvorrichtung nach Anspruch 1, wobei
der Rahmen (3) eine erste Nut (31) zum Haltern der Rückwand (8) aufweist und zumindest ein Teil der Rahmenmodule (16, 17a, 17b, 18, 41a, 41b) einen die erste Nut (31) abschnittsweise ausbildenden ersten Nutabschnitt (22) aufweist.

3. Schrankvorrichtung nach Anspruch 1 oder 2, wobei
der Rahmen eine zweite Nut (32), die sich näher an der Vorderseite befindet als die Rückwand (8), aufweist und zumindest ein Teil der Rahmenmodule (16, 17a, 17b, 18) einen die zweite Nut (32) abschnittsweise ausbildenden zweiten Nutabschnitt (23) aufweist, wobei die Schrankvorrichtung (1) ferner Verbindungstücke (34), die in die zweite Nut (32) eingesetzt sind, aufweist, wobei die Verbindungsstücke (34) zumindest zum Teil überlappend mit mindestens zwei der Rahmenmodule (16, 17a, 17b, 18, 41a, 41b) in die zweite Nut (32) eingesetzt sind.

4. Schrankvorrichtung nach Anspruch 3, wobei
die Verbindungsstücke (34) jeweils einen zur Vorderseite weisenden Überstand (35) aufweisen, wobei zwischen den Überständen (35) und dem Rahmen (3) eine zur Vorderseite offene dritte Nut (36) ausgebildet ist.

5. Schrankvorrichtung nach einem der vorhergehenden Ansprüche, ferner aufweisend:
- eine Abschlussvorrichtung (9), die an der Vorderseite angeordnet ist und durch die die Schrankvorrichtung (1) geöffnet oder geschlossen werden kann.

6. Schrankvorrichtung nach einem der vorhergehenden Ansprüche, wobei die Rahmenmodule (16, 17a, 17b, 18, 41a, 41b) sich senkrecht zur Tiefenrichtung erstreckende Kantenflächen (25a, 25b) aufweisen, wobei
- von zwei entlang der Montagerichtung aufeinanderfolgende Rahmenmodulen (16, 17a, 17b, 18, 41a, 41b) ein erstes Rahmenmodul (16, 17a, 17b, 18, 41a, 41b) eine sich schräg von einer der Kantenflächen (25b) zu einer Kontaktfläche (25a, 26a) der zwei Rahmenmodule (16, 17a, 17b, 18, 41a, 41b) erstreckende erste Bohrung (28) aufweist und ein zweites Rahmenmodul (16, 17a, 17b, 18, 41a, 41b) eine sich schräg von der Kontaktfläche (25a, 25b) erstreckende zweite Bohrung (29) aufweist und die zwei Rahmenmodule (16, 17a, 17b, 18, 41a, 41b) durch einen sich in der ersten Bohrung (28) und der zweiten Bohrung (29) erstreckenden Fixiersplint gesichert oder sicherbar sind und/oder
- in einer der Kantenflächen (25a, 25b) wenigstens eines der Rahmenmodule (16, 17a, 17b, 18, 41a, 41b) eine Bohrung (27) vorgesehen ist, in die ein, insbesondere zur Temperatur- und/oder Druck- und/oder Feuchtigkeits- und/oder Geruchserfassung ausgebildeter, Sensor einsteckbar oder eingesteckt ist und/oder
- in einer der Kantenflächen (25a, 25b) wenigstens eines der Rahmenmodule (16, 17a, 17b, 18, 41a, 41b) eine Bohrung (27) vorgesehen ist, in welche ein Befestigungsmittel zur Befestigung der Schrankvorrichtung (1) einsteckbar oder eingesteckt ist.

7. Schrankvorrichtung nach einem der vorhergehenden Ansprüche, wobei die Rahmenflächen (4, 5, 6, 7) Seitenflächen (4, 5) umfassen und zum Ausbilden der Seitenflächen (4, 5) Rahmenmodule erster Art (16) vorgesehen sind.

8. Schrankvorrichtung nach einem der vorhergehenden Ansprüche, wobei die Rahmenflächen eine Grundfläche (6) und wenigstens eine Deckenfläche (7) umfassen und zum Ausbilden der Grundfläche (6) und/oder der wenigstens einen Deckenfläche (7) Rahmenmodule zweiter Art (17a, 17b) vorgesehen sind, wobei die Rahmenmodule zweiter Art (17a, 17b) wenigstens eine Durchgangsöffnung (21) für elektrische Leitungen der elektrischen Installation und/oder für Löschmittel aufweisen.

9. Schrankvorrichtung nach einem der vorhergehenden Ansprüche, wobei
- zum Verbinden einer jeweiligen Seitenfläche (4, 5) mit der Deckenfläche (7) und einer jeweiligen Seitenfläche (4, 5) mit der Grundfläche (6) jeweils ein Rahmenmodul dritter Art (18) vorgesehen ist, welches einen rechten Innenwinkel ausbildet; und/oder
- die Schrankvorrichtung (1) mehrere aus Rahmenmodulen gebildete Innenwände (40a, 40b) aufweist, die durch T-förmige Rahmenmodule vierter Art (41a, 41b) mit dem Rahmen (3) verbunden sind, wobei insbesondere vier Innenwände (40a, 40b) durch kreuzförmige Verbindungsmodule (43) und/oder drei Innenwände (40a, 40b) durch Rahmenmodule vierter Art (41a, 41b) und/oder zwei Innenwände durch Rahmenmodule dritter Art (18) miteinander verbunden sind; und/oder
- ein oder ein jeweiliges Rahmenmodul (16, 17a, 17b, 18) und ein diesem nachfolgendes Rahmenmodul (16, 17a, 17b, 18) an ihren einander gegenüberliegenden Kontaktflächen (26a, 26b) mit sich entlang der Tiefenrichtung erstreckenden, gegengleich zueinander ausgebildeten Absätzen (39) versehen sind.

10. Schrankvorrichtung nach einem der vorhergehenden Ansprüche, wobei die Rückwand (8) mehrere Sollbruchstellen (38) aufweist und/oder aus mehreren separaten Rückwandelementen (37) gebildet ist.

11. Schrankvorrichtung nach einem der vorhergehenden Ansprüche, wobei die Rahmenmodule (16, 17a, 17b) zumindest teilweise jeweils aus einer Anordnung (50) mit zwei sich entlang der Montagerichtung (M) erstreckenden ersten Passleiten (51), mit zwei sich entlang der Tiefenrichtung erstreckenden zweiten Passleiten (52) und mit zwei Deckelementen (54) gebildet sind, wobei die ersten und zweiten Passleiten (51, 52) bündig zwischen den Deckelementen (54) angeordnet sind und der wenigstens eine Vorsprung (19) und die wenigstens eine Ausnehmung (20) durch Entfernen entsprechender Abschnitte der ersten und/oder zweiten Passleiten (51, 52) und der Deckelemente (54) ausgebildet sind.

12. Schrankvorrichtung nach einem der vorhergehenden Ansprüche, wobei im Inneren (2) der Schrankvorrichtung (1) Montagemittel, insbesondere Montageschienen (12) und/oder Montageplatten (13), für elektrische Komponenten (110) angeordnet sind, wobei die Montagemittel zumindest teilweise in Bohrungen (30) in den Rahmenmodulen (16, 17a, 17b, 18, 41a, 41b) fixiert sind.

13. Elektrische Vorrichtung (100), aufweisend
- eine Schrankvorrichtung (1) nach einem der vorhergehenden Ansprüche; und
- elektrische Komponenten (110), insbesondere Schalt- und/oder Regelungskomponenten, welche im Inneren (2) der Schrankvorrichtung (1) befestigt sind.

14. Verfahren zur Herstellung eines Möbelstücks (200) oder mehrerer Möbelstücke (200), wobei das oder ein jeweiliges Möbelstück (200) wenigstens einen Korpus (201) aufweist, wobei das Verfahren folgende Schritte umfasst:
- Bereitstellen einer oder mehrerer Schrankvorrichtung (1) nach einem der Ansprüche 1 bis 12 oder einer oder mehrerer elektrischen Vorrichtung (100) nach Anspruch 13;
- Zerlegen des Rahmens (3) in die Rahmenmodule (16, 17a, 17b, 18, 41a, 41b);
- Zusammensetzen eines Teils der durch das Zerlegen des Rahmens (3) erhaltenen Rahmenmodule (16, 17a, 17b, 18, 41a, 41b) zum Ausbilden des wenigstens einen Korpus (201) des Möbelstücks (200) oder der Möbelstücke (200), wobei zum Zusammensetzen die Ausnehmung (20) eines jeweiligen zum Zusammensetzen des Korpus (201) verwendeten Rahmenmoduls (16, 17a, 17b, 18, 41a, 41b) den Vorsprung (19) des dem jeweiligen Rahmenmodul (16, 17a, 17b, 18, 41a, 41b) entlang einer Korpusmontagerichtung nachfolgenden Rahmenmoduls (16, 17a, 17b, 18, 41a, 41b) formschlüssig hintergreift.

15. Verfahren nach Anspruch 14, wobei
eine Schrankvorrichtung (1) mit den Merkmalen des Anspruchs 5 und/oder des Anspruchs 12 verwendet wird, ferner umfassend folgenden vor dem Zerlegen des Rahmens (3) durchgeführten Schritt:
- Demontieren der Abschlussvorrichtung (9) und/oder der Montagemittel.
